(19) **Europäisches Patentamt / European Patent Office / Office européen des brevets**

(11) **EP 1 918 915 B1**

(12) **EUROPEAN PATENT SPECIFICATION**

(45) Date of publication and mention
of the grant of the patent:
**05.03.2014 Bulletin 2014/10**

(51) Int Cl.:
*G11B 7/0065* (2006.01)  *G11B 23/38* (2006.01)

(21) Application number: **07301468.0**

(22) Date of filing: **16.10.2007**

(54) **Method for producing a security mark on an optical data carrier**

Verfahren zur Herstellung einer Sicherheitsmarke auf einem optischen Datenträger

Procédé de production d'une marque de sécurité sur un support de données optique

(84) Designated Contracting States:
**DE FR GB**

(30) Priority: **31.10.2006 EP 06123229**

(43) Date of publication of application:
**07.05.2008 Bulletin 2008/19**

(73) Proprietor: **Thomson Licensing**
**92130 Issy-les-Moulineaux (FR)**

(72) Inventors:
• **Knittel, Joachim**
**78532 Tuttlingen (DE)**

• **Richter, Hartmut**
**78052 Villingen-Schwenningen (DE)**

(74) Representative: **Schmidt-Uhlig, Thomas**
**Deutsche Thomson OHG**
**European Patent Operations**
**Karl-Wiechert-Allee 74**
**30625 Hannover (DE)**

(56) References cited:
EP-A2- 1 626 407    EP-B1- 0 374 256
WO-A1-2004/095447    WO-A2-98/12703
US-A- 4 677 285    US-A1- 2003 233 100

EP 1 918 915 B1

**Description**

The present invention is directed to a method for generating a security mark on an optical data carrier, a data carrier, comprising a security mark, a method for reading out the security mark stored on the data carrier and a device for reading out the security mark stored on the data carrier.

The term security mark is to denote a bit sequence, which is for example used for providing an authentication key or decrypting key on a data carrier. Authentication and encryption are commonly used on data carriers in order to prevent unauthorized copying of information, which is stored on the data carrier and protected by copyright law. The authentication key is used for establishing or confirming that the data carrier contains a legally sold copy and has not been copied in breach of copyright protection. The readout of data from the data carrier is prevented if the authentication key is inexistent or incorrect. Alternatively, the data may be encrypted, such that a decrypting key is necessary for obtaining the stored information from the read out bit sequences.

The security mark may only protect unauthorized copying and reproduction of data stored on a data carrier if the security mark may not be copied using standard disk drives. Conventional disk drives such as Compact Disks (CD), Digital Versatile Disks (DVD) or BluRay Disks (BD) use a focused laser beam for storing data on the disk. Thereby, a series of microscopic indentations ("pits", with the gaps between them referred to as "lands") are formed in the recording area of the disk. The laser beam is directed onto a reflective surface of the disk to read the pattern of pits and lands. The pattern of changing intensity of the reflected beam is converted into binary data.

The international patent application WO 2005/048256 discloses using a hologram, from which a key or authentication mark can be derived. A hologram is an advanced form of photographic recording that allows an image to be recorded in three dimensions. The technique of holography can also be used to optically store, retrieve, and process information. To produce a recording of the phase of the light wave at each point in an image, holography uses a reference beam which is combined with the light from the scene or object (the object beam). Optical interference between the reference beam and the object beam, due to the superposition of the light waves, produces a series of intensity fringes that can be recorded on standard photographic film. These fringes form a type of diffraction pattern on the film, which is called the hologram or the interference pattern. Therefore two coherent light beams, an object beam and a reference beam, are necessary for recording a hologram. A conventional disk drive does not have the means for recording a hologram. The technical equipment and know how for copying a holographic recording is complex and expensive. Furthermore, the analysis and reproduction of the diffraction pattern on the film is a formidable task. Therefore, unauthorized copying and reproduction of the security mark is impeded.

However, the security mark stored as a holographic recording may not be readout using a standard disk drive. According to the international patent application WO 2005/048256 a unique spatial modulation filter must be applied at the level of the analysis of the security mark. Therefore, the holographic security mark according to the state of the art necessitates a difficult and expensive modification of the disk drive in order to be readable. The data carriers having these holographic security marks are not compatible with existing disk drives.

Therefore, it is an object of the present invention to provide an improved data carrier, comprising a security mark, which may not be copied using standard disk drive. The security mark should be readable using disk drives, which do not require an ample and expensive modification in relation to conventional disk drives. Furthermore, it is an object to provide a method for generating the improved optical data carrier having the security mark, a method for reading out the security mark and a device for reading out the security mark.

The object is solved by the method for generating a security mark on an optical data carrier and the respective optical data carrier according to the appended claims.

Fig. 1    shows a top view of a schematic depiction of a data carrier having a region with security marks according to the preferred embodiment of the present invention,

Fig. 2    shows a top view of a close up of the region of security marks of the data carrier of Fig. 1,

Fig. 3    shows a top view of a close up of a line of security marks of Fig. 2,

Fig. 4    shows a lateral view of the data carrier of Fig. 1,

Fig. 5    shows a device for generating a security mark on an optical data carrier,

Fig. 6    shows a readout device for reading out the security mark stored on the data carrier of Fig. 1,

Fig. 7    shows a detection area of the readout device of Fig. 6,

Fig. 8      shows the detection area of Fig. 7, wherein the detection area is illuminated by first readout light beams,

Fig. 9      shows the detection area of Fig. 7, wherein the detection area is illuminated by second readout light beams, and

Fig. 10     shows a graph of normalized total signal intensity on the detection area of Fig. 7 versus a shift of the incident readout light beam.

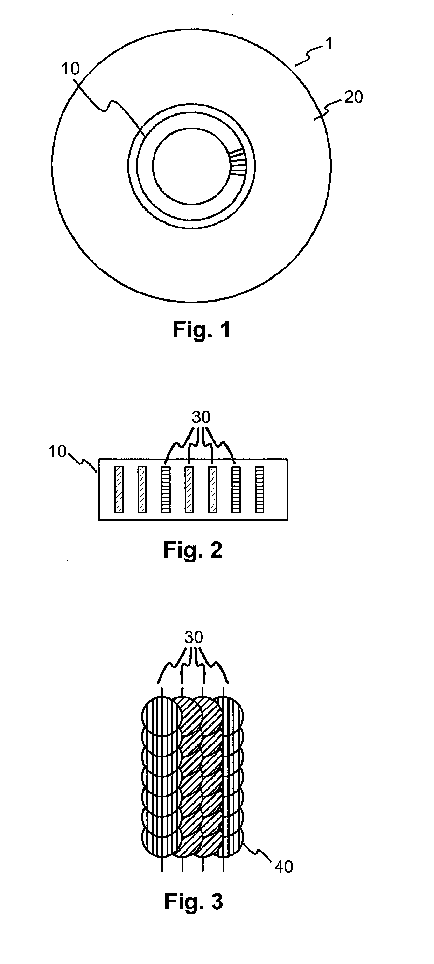

Fig. 1 shows a top view of a schematic depiction of a data carrier having a region with security marks according to the preferred embodiment of the present invention. The data carrier has the shape of a disk 1. A hologram area 10 is provided on the disk 1 in a region close to the centre of the disk 1. The hologram area 10 is either an integral part of the disk 1, or it is an independent holographic storage medium fixed to the disk 1. The hologram area 10 forms an annulus, i.e. a ringshaped geometric figure. The disk 1 comprises a region 20 for data storage. The data storage region 20 also has an annular shape, which encloses the hologram area 10.

Fig. 2 shows a top view of a close up of the hologram area 10 of the data carrier of Fig. 1. The hologram area 10 is used for storing security marks on the data carrier. The security marks are formed as a plurality of stripes 30, which are arranged essentially in parallel to each other. More precisely, each stripe is collinear with a straight line projecting from the centre of the circular data carrier in Fig. 1 to the circumference of the circular data carrier. Adjacent stripes are approximately parallel to each other. Though the stripes 30 are drawn as separate stripes 30, they can likewise overlap.

In Fig. 3 four stripes 30 of the hologram area 10 Fig. 2 are depicted. The stripes 30 consist of a plurality of approximately circular holograms 40, which are superimposed upon each other. As a consequence, the reconstructed object beam does not change when the readout beam is shifted along the stripe. The readout of the security mark is insensitive to a shift of the readout light beam in the direction of the stripe of identical holograms 40. Therefore, no additional guiding track for positioning of the readout light beam needs to be provided.

Each stripe 30 in Fig. 3 represents a single bit of information. The information bit is read out by illuminating the stripe 30 with a readout light beam. Through diffraction by the holograms 40 a reconstructed object beam is generated. The pattern of the reconstructed object beam remains virtually unchanged if the readout light beam is shifted in the lengthwise direction of each stripe 30. Therefore, the radial position of the readout light beam with respect to the stripes 30 in the hologram area 10 is uncritical. Preferably, the light beam for readout is focused in the plane of the hologram area 10. The focus position can be controlled via the conventional focus servo providing that the disk is sufficiently reflective in the region of the hologram area 10.

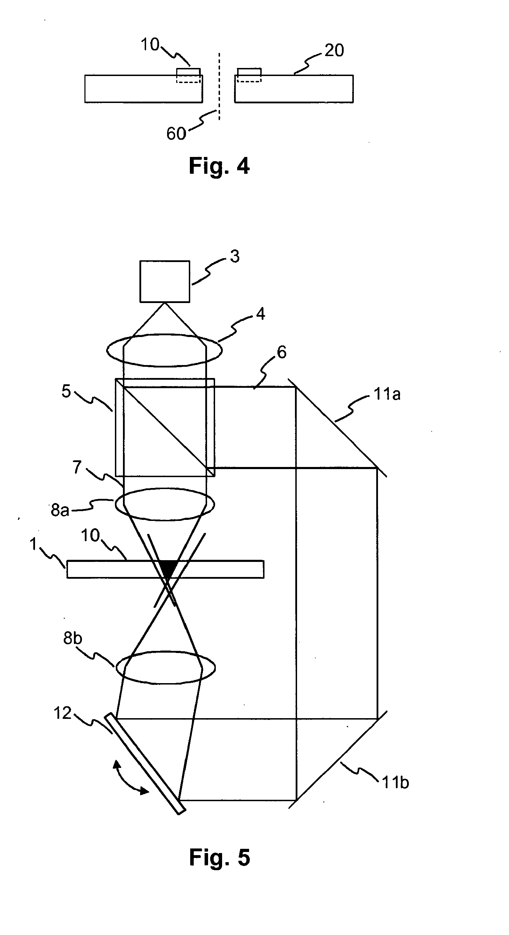

Fig. 4 shows a cross section of the data carrier of Fig. 1. The centre of the circular data carrier is depicted by the vertical line 60 through the center hole of the data carrier. The surface of the data carrier is essentially flat except for the annular hologram area 10, which sticks out from the surface of the data carrier. In this case a readout apparatus for the data carrier 1 needs to be capable of focusing a readout light beam onto the surface of the data carrier. Of course, the hologram area 10 may likewise be integrated within the data carrier, as indicated by the dashed lines.

Fig. 5 shows a device for generating a security mark on an optical data carrier. The optical data carrier 1 and the hologram area of Fig. 1 are designated by reference signs 1 and 10, respectively. A laser source 3 is shown in Fig. 5. The laser light emitted from the source 3 is collimated by a collimator lens 4. It is directed through a beam splitter 5, which outputs a first collimated laser beam 7 and a second collimated laser beam 6. The first laser beam 7 is directed along a first direction and focused onto the hologram area 10 by a first objective lens 8a. The second laser beam 6 is directed along a second direction through the second objective lens 8b onto the hologram area 10. Two fixed mirrors 11a, 11b and an adjustable mirror 12 are provided in Fig. 5 in order to redirect the second laser beam 6. The second laser beam 6 reaches the hologram area 10 from the opposite side than the first laser beam 7. Of course, it is likewise possible that both laser beams 6, 7 impinge on the hologram area 10 from the same side, e.g. from the side of the first laser beam 7. Said second direction of the second laser beam 6 is slightly tilted by a tilt angle with respect to the direction of the first laser beam 7. The tilt angle can be adjusted by the adjustable mirror 12, which directs the second laser beam 6 through the second objective lens 8b.

The first and second laser beams 7 and 6 overlap within the hologram area 10 and create an interference pattern within the material. The interference pattern depends on the tilt angle, which is preferably fixed between -5° and 5°. The maximum angle depends on the type of optical data carrier and the objective lens used for playback. For example, for a Compact Disk a larger angle is needed than for a BluRay disk. The hologram area 10 in Fig. 5 is shown in a cross sectional view similar to the depiction in Fig. 4. The interference pattern introduced into the holographic material corresponds to one of the holograms 40 in Fig. 3. The second laser beam 6 in Fig. 5 is tilted in a direction perpendicular to the lengthwise direction of one of the stripes 30 in Figs. 2 and 3. The tilt angle lies in a plane perpendicular to the radial direction of the circular data carrier 1 in Fig. 1. Therefore, the optical properties of the resulting interference pattern do not change in the lengthwise direction of the stripes 30. However, the shift selectivity in a direction perpendicular to the length of the stripes 30 is high. An information bit of 0 or 1 is encoded by the positive or negative shift angle of the second laser beam 6 and the resulting interference pattern. Several overlapping holograms 40 are written for each data bit.

Furthermore, the radius of the two focused laser beams 6 and 7 within the hologram area 10 has the same magnitude.

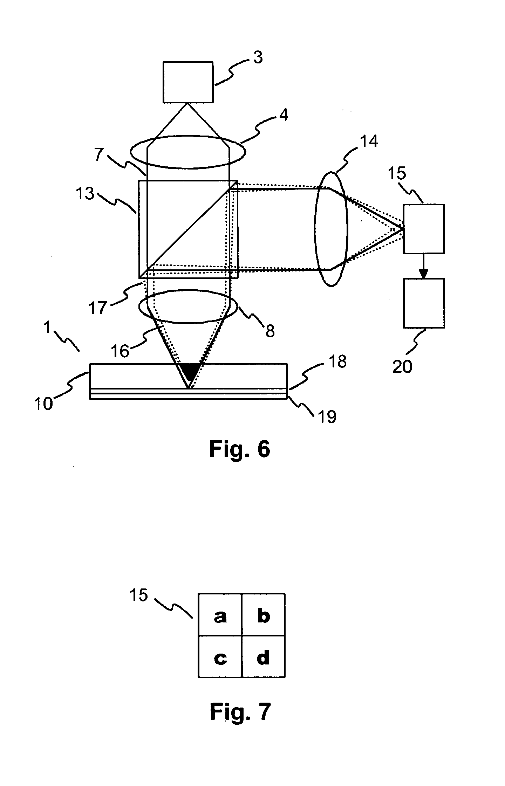

Fig. 6 shows readout device for reading out the security mark stored on the data carrier of Fig. 1. Identical reference signs in Fig. 5 and 6 denote similar objects in both Figures. In particular the laser source 3, the collimator lens 4, and the collimated laser beam 7 are arranged essentially in the same way as in Fig. 5. The laser beam 7 is directed through a beam splitter 13 and an objective lens 8 onto the hologram area 10. A security mark is stored in the hologram area 10 in Fig. 6. A reflective layer 18 and a substrate 19 are positioned below the hologram area 10. Furthermore, the readout device comprises a detector 15 for detecting the light reflected from the reflective layer 18. A focus lens 14 focuses the reflected light onto the detector 15. A comparator 20 analyzes the intensity distribution detected by the detector 15 for determining the tilt angle of a reconstructed signal beam 17.

Three different laser beams 7, 16 and 17 are shown in Fig. 6. All three beams reach the detector through the detector lens 14. The first beam 7 is a beam, which passes through the interference pattern of the hologram without being diffracted. The reflection reaches the beam splitter 13 and is reflected from there to the detector 15. Part of the laser beam 7 is diffracted by the interference pattern stored in the hologram area 10 and generates the signal beam 17. This signal beam 17 is directed through the objective lens 8, the beam splitter 13 and the focus lens 14 onto the detector 15. As the signal beam 17 is slightly tilted, the focus of the signal beam 17 is situated off the centre on the detector 15. In addition, there is a second signal beam 16, which is created by the reflected, phase-conjugated readout beam 7. This phase-conjugated signal beam 16 propagates first to the reflective layer 18, before it is focused onto the detector 15. Due to the reflection losses at the mirror layer 18 the phase-conjugated signal beam 16 is much weaker than the direct signal beam 17. As a consequence, the light pattern on the detector surface of the detector 15 is formed by the superimposition of three distinct beams 7, 16 and 17.

Fig. 7 shows the detection area of the detector 15 of Fig. 6. The detection area is formed of four distinct detector elements a, b, c and d, which are positioned in a chequered arrangement.

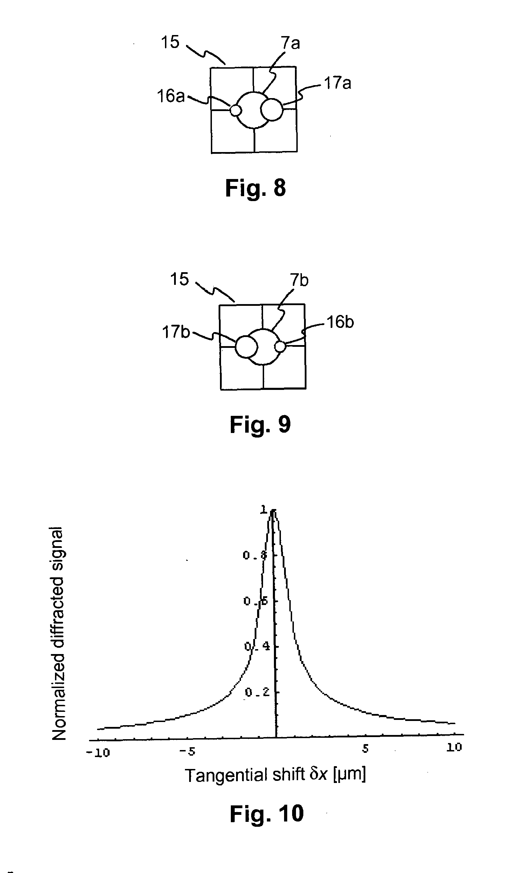

Figs. 8 and 9 each show the detection area of Fig. 7. The detection area is illuminated by the different light beams 7, 16, 17 coming from the hologram area 10 of Fig. 6. Light beams 7, 16 and 17 correspond to the circular spots 7a/b, 16a/b and 17a/b, respectively. The undiffracted laser beam 7 forms a circular spot 7a/b in the centre of the detection area in both Figs. 8 and 9. The position of the spot resulting from the signal beam 17 is shifted to the right in Fig. 8 (spot 17a) and to the left in Fig. 9 (17b). The spot resulting from the phase-conjugated signal beam 16 is shifted to the left in Fig. 8 (spot 16a) and to the right in Fig. 9 (spot 16b). The spots 7a and 7b of the undiffracted laser beam 7 have the greatest intensity of all the spots. Therefore the intensity of the spots 17a/17b is larger than the intensity of the spots 16a/b. Therefore, the light intensity distribution in Fig. 8 is shifted to the right, whereas the light intensity distribution in Fig. 9 is shifted to the left. The position of the spots 16a/b and 17a/b depends on the tilt angle used during the production of the interference pattern in the hologram area 10. Therefore, the information bit corresponding to the shift angle may be determined by finding out whether the intensity distribution is shifted to the left or right on the detection are. Let Ia, Ib, Ic and Id represent the total light intensity in the respective detector areas a, b, c and d. Then, the sign of S=(Ia+Ic-Ib-Id)/(Ia+Ib+Ic+Id) is representative of the stored information bit. The signal S is similar to a tangential push-pull signal. If a position sensitive photo detector is used, it is also possible to encode more than one information bit. In addition to the sign of the tilt angle also the value of the tilt angle can be detected.

The total normalized diffracted signal as a function of the readout beam shift is given by the following equation:

$$\eta(\delta x, \delta y) = \frac{1}{L_x L_y} \int_{-L_x/2}^{+L_x/2} \int_{-L_{yx}/2}^{+L_y/2} \operatorname{sinc}^2\left\{\frac{nL}{\lambda}\left[\frac{x\delta x + y\delta y}{R_1}\left(\frac{1}{R_2} - \frac{1}{R_1}\right) + \frac{u_s \delta x}{R_1}\right]\right\} dx\,dy$$

In this equation, the variables $\delta x$, $\delta y$ represent the shift of the incident light beam 7 in Fig. 6 with respect to the recorded interference pattern in the hologram area. $\delta y$ represents a shift of the incident light beam in a radial direction of the disk in Fig. 2. $\delta x$ represents a shift in a scanning direction of the incident laser beam, which is perpendicular to the radial direction. The above formula applies for a single, non overlapping hologram recorded using the setup of Fig. 5. $L_x$ and $L_y$ designate the lateral extension of the hologram. L is the thickness of the hologram. $n$ is the refractive index of the holographic material. $R_1$ is the radius of the focused incident laser beam 7 in Fig. 5. $R_2$ is the radius of the focused laser beam 6 in Fig. 5; $u_s$ represents the tilt angle between the incident laser beams 7 and 6 in Fig. 5. $\lambda$ is the wavelength of the light emitted by the laser source. If both incident waves 6 and 7 have the same radius $(R_1=R_2)$, then the resulting total normalized diffracted signal is independent of a signal shift in the direction $\delta y$.

Fig. 10 shows the total normalized diffracted signal $I(\delta x, \delta y)$ in relation to the shift $\delta x$. Since the signal is normalized, the maximum signal intensity is set equal to one. The curve in Fig. 10 has been calculated for the following values, which are realistic for a disk using a blue laser beam.

$$R_1 = R_2 = R = 110 \mu m$$

$$L = 10 \mu m$$

$$L_x = L_y = 70 \mu m$$

$$n = 1.6$$

$$u_s = 3°$$

The total normalized diffracted signal represents a distribution, which has a singular peak at $\delta x = 0$. The total signal intensity decreases continually in the positive and negative direction $\delta x$. At around $\pm 5 \mu m$ the total signal intensity has reached less than 1/5 of the peak. The shift selectivity is roughly about 10 $\mu m$. Therefore, adjacent interference patterns are distinguishable if they are recorded at a distance of $10 \mu m$. If the security markers are recorded in a distance $r = 20mm$ from the centre of the disk in Fig. 2, then the circumference of the security marker region is equal to 2nr and the total number of bits is equal to $2\pi r/10 \mu m = 12500$ raw data bits.

The main advantages of the security mark recorded according to the preferred embodiment are the following. The additional security mark is compatible with existing disk families such as Compact Disk (CD), Digital Versatile Disk (DVD) and BluRay disk (BD). The readout device of Fig. 6 corresponds largely to existing readout devices. A comparator 20 for determining the light intensity distribution on the detector area has to be added to existing readout devices in order to detect the stored information bit. However, the standard photodetector for data readout can be used for reading the security marks. The costs for adapting the existing readout devices are low. The production of the respective data carriers having the security mark is also very low.

The above preferred embodiment is not intended to restrict the scope of protection to be conferred to the present application. The preferred embodiment is only meant to exemplify a convenient way for implementing the invention. The invention is defined by the appended claims.

## Claims

1. A method for generating a security mark (30) on an optical data carrier (1), the method **comprising** the steps of:

   directing a first and a second light beam (7, 6) onto a hologram area (10) of the optical data carrier (1), wherein the first and second light beams (7, 6) are coherent light beams,
   the first light beam (7) being directed onto the hologram area (10) along a first direction, and the second light beam (6) being directed onto the hologram area (10) along a second direction,
   wherein the second direction is tilted by a predefined tilt angle with respect to the first direction and an information bit is encoded by the sign and/or the value of the tilt angle, and
   generating the security mark (30) by performing the steps of:

   recording a first security hologram (40) in the hologram area (10) through interference of the first and the second light beam (7, 6),
   shifting the first and second light beams (7, 6) in a third direction relative to the first and second direction,
   recording a further security hologram (40) in the hologram area (10) through interference of the first and the second light beam (7, 6), the further security hologram (40) being identical to said first security hologram (40), and
   repeating the steps of shifting the first and second light beams (7, 6) and recording a further security hologram (40) such that a line of overlapping identical security holograms (40) is formed perpendicular to a scanning direction for reading information stored in the hologram area (10).

2. The method according to claim 1, **wherein** the tilt angle is greater than or equal to -5° and smaller than or equal to 5°.

3. The method according to claim 1 or 2, **wherein** the first and/or second light beams (7, 6) are focused on the hologram area (10).

4. An optical data carrier (1), the optical data carrier (1) comprising a security mark (30) in a hologram area (10), **characterized in that** said security mark (30) consists of a line of overlapping identical security holograms (40) formed perpendicular to a scanning direction for reading information stored in the hologram area (10), wherein said security mark (30) is adapted to generate a reconstructed light beam (17a, 17b) along a second direction when illuminated by a readout light beam (7) along a first direction, the second direction being tilted by a tilt angle relative to the first direction, wherein an information bit is encoded by the sign and/or the value of the tilt angle. ,

5. A device for generating a security mark (30) on an optical data carrier (1), the device comprising directing means (8a, 8b, 11) for directing a first and a second light beam (7, 6) onto a hologram area (10) of the optical data carrier (1), wherein the first and second light beams (7, 6) are coherent light beams, the directing means (8a, 8b, 11) being adapted to direct the first light beam (7) onto the hologram area (10) along a first direction and the second light beam (6) onto the hologram area (10) along a second direction, **characterized in that** the device further comprises:

tilting means (12) for tilting the second light beam along the second direction by a predefined tilt angle with respect to the first direction, wherein an information bit is encoded by the sign and/or the value of the tilt angle, and recording means for generating the security mark (30) by performing the steps of:

recording a first security hologram (40) in the hologram area (10) through interference of the first and the second light beam (7, 6), shifting the first and second light beams (7, 6) in a third direction relative to the first and second direction, recording a further security hologram (40) in the hologram area (10) through interference of the first and the second light beam (7, 6), the further security hologram (40) being identical to said first security hologram (40), and repeating the steps of shifting the first and second light beams (7, 6) and recording a further security hologram (40) such that a line of overlapping identical security holograms (40) is formed perpendicular to a scanning direction for reading information stored in the hologram area (10).

6. A method for reading out a security mark (30) stored in a hologram area (10) of an optical data carrier (1), said security mark (30) consisting of a line of overlapping identical security holograms (40) formed perpendicular to a scanning direction for reading information stored in the hologram area (10), the method **comprising** the steps of:

directing a readout light beam (7) onto the security mark (30) along a first direction, directing a reconstructed light beam (17a, 17b) along a second direction onto a detector (15) with photo detection areas (a, b, c, d) adapted to detect a light intensity, the second direction depending on an information bit recorded in the security mark (30), and detecting the information bit from a tilt angle between the first direction and the second direction by analyzing an intensity distribution of the reconstructed light beam (17a, 17b) on the photo detection areas (a, b, c, d).

7. A readout device for reading out a security mark (30) stored in a hologram area (10) of an optical data carrier (1), said security mark (30) consisting of a line of overlapping identical security holograms (40) formed perpendicular to a scanning direction for reading information stored in the hologram area (10), the readout device comprising:

a light source (3) adapted to direct a readout light beam (7) onto the security mark (30) along a first direction, a detector (15) with photo detection areas (a, b, c, d) adapted to detect a light intensity, and a collimator (8) adapted to direct a reconstructed light beam (17a, 17b) along a second direction onto the photo detection areas (a, b, c, d) of the detector (15), the second direction depending on an information bit recorded in the security mark (30),

**characterized in that** the device further comprises a comparator (20) adapted to detect the information bit from a tilt angle between the first direction and the second direction by analyzing a light intensity distribution of the reconstructed light beam (17a, 17b) on the photo detection areas (a, b, c, d).

**Patentansprüche**

1. Verfahren zum Erzeugen einer Sicherheitsmarkierung (30) auf einem optischen Datenträger (1), wobei das Verfahren die folgenden Schritte **umfasst:**

   Lenken eines ersten und eines zweiten Lichtstahls (7, 6) auf einen Hologrammbereich (10) des optischen Datenträgers (1), wobei der erste und der zweite Lichtstrahl (7, 6) kohärente Lichtstrahlen sind, wobei der erste Lichtstrahl (7) entlang einer ersten Richtung auf den Hologrammbereich (10) gelenkt wird und der zweite Lichtstrahl (6) entlang einer zweiten Richtung auf den Hologrammbereich (10) gelenkt wird, wobei die zweite Richtung um einen vorgegebenen Neigungswinkel in Bezug auf die erste Richtung geneigt wird und wobei durch das Vorzeichen und/oder durch den Wert des Neigungswinkels ein Informationsbit codiert wird, und Erzeugen der Sicherheitsmarkierung (30) durch Ausführen der folgenden Schritte:

   Aufzeichnen eines ersten Sicherheitshologramms (40) in dem Hologrammbereich (10) durch Interferenz des ersten und des zweiten Lichtstrahls (7, 6), Verschieben des ersten und des zweiten Lichtstrahls (7, 6) in einer dritten Richtung relativ zu der ersten und zu der zweiten Richtung, Aufzeichnen eines weiteren Sicherheitshologramms (40) in dem Hologrammbereich (10) durch Interferenz des ersten und des zweiten Lichtstrahls (7, 6), wobei das weitere Sicherheitshologramm (40) gleich dem ersten Sicherheitshologramm (40) ist, und Wiederholen der Schritte des Verschiebens des ersten und des zweiten Lichtstrahls (7, 6) und des Aufzeichnens eines weiteren Sicherheitshologramms (40) in der Weise, dass senkrecht zu einer Abtastrichtung zum Lesen von in dem Hologrammbereich (10) gespeicherten Informationen eine Linie sich überschneidender gleicher Sicherheitshologramme (40) gebildet wird.

2. Verfahren nach Anspruch 1, **wobei** der Neigungswinkel größer oder gleich -5° und kleiner oder gleich 5° ist.

3. Verfahren nach Anspruch 1 oder 2, **wobei** der erste und/oder der zweite Lichtstrahl (7, 6) auf den Hologrammbereich (10) fokussiert werden.

4. Optischer Datenträger (1), wobei der optische Datenträger (1) eine Sicherheitsmarkierung (30) in einem Hologrammbereich (10) umfasst, **dadurch gekennzeichnet, dass** die Sicherheitsmarkierung (30) aus einer Linie sich überschneidender gleicher Sicherheitshologramme (40) besteht, die senkrecht zu einer Abtastrichtung zum Lesen von in dem Hologrammbereich (10) gespeicherten Informationen gebildet sind, wobei die Sicherheitsmarkierung (30) zum Erzeugen eines rekonstruierten Lichtstrahls (17a, 17b) entlang einer zweiten Richtung, wenn sie durch einen Ausleselichtstrahl (7) entlang einer ersten Richtung beleuchtet wird, wobei die zweite Richtung um einen Neigungswinkel relativ zu der ersten Richtung geneigt wird, wobei durch das Vorzeichen und/oder durch den Wert des Neigungswinkels ein Informationsbit codiert wird, ausgelegt ist.

5. Vorrichtung zum Erzeugen einer Sicherheitsmarkierung (30) auf einem optischen Datenträger (1), wobei die Vorrichtung Lenkmittel (8a, 8b, 11) zum Lenken eines ersten und eines zweiten Lichtstrahls (7, 6) auf einen Hologrammbereich (10) des optischen Datenträgers (1) umfasst, wobei der erste und der zweite Lichtstrahl (7, 6) kohärente Lichtstrahlen sind, wobei die Lenkmittel (8a, 8b, 11) dafür ausgelegt sind, den ersten Lichtstrahl (7) entlang einer ersten Richtung auf den Hologrammbereich (10) zu lenken und den zweiten Lichtstrahl (6) entlang einer zweiten Richtung auf den Hologrammbereich (10) zu lenken, **dadurch gekennzeichnet, dass** die Vorrichtung ferner umfasst:

   Neigemittel (12), um den zweiten Lichtstrahl entlang der zweiten Richtung um einen vorgegebenen Neigungswinkel in Bezug auf die erste Richtung zu neigen, wobei durch das Vorzeichen und/oder durch den Wert des Neigungswinkels ein Informationsbit codiert wird, und Aufzeichnungsmittel zum Erzeugen der Sicherheitsmarkierung (30) durch Ausführen der folgenden Schritte:

   Aufzeichnen eines ersten Sicherheitshologramms (40) in dem Hologrammbereich (10) durch Interferenz des ersten und des zweiten Lichtstrahls (7, 6), Verschieben des ersten und des zweiten Lichtstrahls (7, 6) in einer dritten Richtung relativ zu der ersten und zu der zweiten Richtung,

Aufzeichnen eines weiteren Sicherheitshologramms (40) in dem Hologrammbereich (10) durch Interferenz des ersten und des zweiten Lichtstrahls (7, 6), wobei das weitere Sicherheitshologramm (40) gleich dem ersten Sicherheitshologramm (40) ist, und

Wiederholen der Schritte des Verschiebens des ersten und des zweiten Lichtstrahls (7, 6) und des Aufzeichnens eines weiteren Sicherheitshologramms (40) in der Weise, dass senkrecht zu einer Abtastrichtung zum Lesen von in dem Hologrammbereich (10) gespeicherten Informationen eine Linie sich überschneidender gleicher Sicherheitshologramme (40) gebildet wird.

6. Verfahren zum Auslesen einer in einem Hologrammbereich (10) eines optischen Datenträgers (1) gespeicherten Sicherheitsmarkierung (30), wobei die Sicherheitsmarkierung (30) aus einer Linie sich überschneidender gleicher Sicherheitshologramme (40) besteht, die senkrecht zu einer Abtastrichtung zum Lesen von in dem Hologrammbereich (10) gespeicherten Informationen gebildet ist, wobei das Verfahren die folgenden Schritte **umfasst:**

Lenken eines Ausleselichtstrahls (7) entlang einer ersten Richtung auf die Sicherheitsmarkierung (30),

Lenken eines rekonstruierten Lichtstrahls (17a, 17b) entlang einer zweiten Richtung auf einen Detektor (15) mit Lichtdetektierungsbereichen (a, b, c, d), die zum Detektieren einer Lichtintensität ausgelegt sind, wobei die zweite Richtung von einem in der Sicherheitsmarkierung (30) aufgezeichneten Informationsbit abhängt, und

Detektieren des Informationsbits aus einem Neigungswinkel zwischen der ersten Richtung und der zweiten Richtung durch Analysieren einer Intensitätsverteilung des rekonstruierten Lichtstrahls (17a, 17b) auf den Lichtdetektierungsbereichen (a, b, c, d).

7. Auslesevorrichtung zum Auslesen einer in einem Hologrammbereich (10) eines optischen Datenträgers (1) gespeicherten Sicherheitsmarkierung (30), wobei die Sicherheitsmarkierung (30) aus einer Linie sich überschneidender gleicher Sicherheitshologramme (40) besteht, die senkrecht zu einer Abtastrichtung zum Lesen von in dem Hologrammbereich (10) gespeicherten Informationen gebildet ist, wobei die Auslesevorrichtung umfasst:

eine Lichtquelle (3), die dafür ausgelegt ist, einen Ausleselichtstrahl (7) entlang einer ersten Richtung auf die Sicherheitsmarkierung (30) zu lenken,

einen Detektor (15) mit Lichtdetektierungsbereichen (a, b, c, d), der zum Detektieren einer Lichtintensität ausgelegt ist, und

einen Kollimator (8), der dafür ausgelegt ist, einen rekonstruierten Lichtstrahl (17a, 17b) entlang einer zweiten Richtung auf die Lichtdetektierungsbereiche (a, b, c, d) des Detektors (15) zu lenken, wobei die zweite Richtung von einem in der Sicherheitsmarkierung (30) aufgezeichneten Informationsbit abhängt,

**dadurch gekennzeichnet, dass** die Vorrichtung ferner einen Komparator (20) umfasst, der dafür ausgelegt ist, das Informationsbit aus einem Neigungswinkel zwischen der ersten Richtung und der zweiten Richtung durch Analysieren einer Lichtintensitätsverteilung des rekonstruierten Lichtstrahls (17a, 17b) auf den Lichtdetektierungsbereichen (a, b, c, d) zu detektieren.

**Revendications**

1. Procédé de production d'une marque de sécurité (30) sur un support de données optique (1), le procédé comprenant les étapes de : direction d'un premier et un second faisceau lumineux (7, 6) vers une zone d'hologramme (10) du support de données optique (1), dans lequel les premier et second faisceaux lumineux (7, 6) sont des faisceaux lumineux cohérents, le premier faisceau lumineux (7) étant dirigé vers la zone d'hologramme (10) en suivant une première direction, et le second faisceau lumineux (6) étant dirigé vers la zone d'hologramme (10) en suivant une deuxième direction, où la deuxième direction est inclinée selon un angle d'inclinaison prédéfini par rapport à la première direction et un bit d'informations est codé par le signe et/ou la valeur de l'angle d'inclinaison, et génération de la marque de sécurité (30) en effectuant les étapes suivantes :

enregistrement d'un premier hologramme de sécurité (40) dans la zone d'hologramme (10) via une interférence du premier et du second faisceaux lumineux (7, 6),

déplacement du premier et du second faisceaux lumineux (7, 6) dans une troisième direction relative à la première et à la deuxième direction,

enregistrement d'un hologramme de sécurité supplémentaire (40) dans la zone d'hologramme (10) via l'interférence du premier et du second faisceaux lumineux (7, 6), l'hologramme de sécurité supplémentaire (40) étant identique audit premier hologramme de sécurité (40), et

répétition des étapes de déplacement du premier et du second faisceaux lumineux (7,6) et enregistrement d'un hologramme de sécurité supplémentaire (40) de sorte qu'une rangée d'hologrammes de sécurité identiques se chevauchant (40) est formée perpendiculairement à une direction de balayage pour la lecture des informations stockées dans la zone d'hologramme (10).

2. Le procédé selon la revendication 1, dans lequel l'angle d'inclinaison est supérieur ou égal à -5° et inférieur ou égal à 5°.

3. Le procédé selon la revendication 1 ou 2, dans lequel le premier et/ou le second faisceau lumineux (7, 6) est/sont concentré(s) sur la zone d'hologramme (10).

4. Un support de données optique (1), le support de données optique (1) comprenant une marque de sécurité (30) dans une zone d'hologramme (10), **caractérisé en ce que** ladite marque de sécurité (30) consiste en une rangée d'hologrammes de sécurité identiques se chevauchant (40) formée perpendiculairement à une direction de balayage pour la lecture d'informations stockées dans la zone d'hologramme (10), où ladite marque de sécurité (30) est adaptée pour générer un faisceau lumineux reconstruit (17a, 17b) en suivant une seconde direction lorsqu'il est illuminé par un faisceau de lecture lumineux (7) en suivant une première direction, la seconde direction étant inclinée selon un angle d'inclinaison relatif à la première direction, dans lequel le bit d'informations est codé par le signe et/ou la valeur de l'angle d'inclinaison.

5. Un dispositif pour générer une marque de sécurité (30) sur un support de données optique (1), le dispositif comprenant un moyen de direction (8a, 8b, 11) pour diriger un premier et un second faisceau de lecture lumineux (7, 6) vers une zone d'hologramme (10) du support de données optique (1), dans lequel le premier et le second faisceau lumineux (7, 6) sont des faisceaux lumineux cohérents, les moyens de direction (8a, 8b, 11) étant adaptés pour diriger le premier faisceau lumineux (7) vers la zone d'hologramme (10) en suivant une première direction et le second faisceau lumineux (6) vers la zone d'hologramme (10) en suivant une seconde direction, **caractérisé en ce que** le dispositif comprend en outre : un moyen d'inclinaison (12) pour incliner le second faisceau lumineux en suivant la seconde direction selon un angle d'inclinaison prédéfini par rapport à la première direction dans lequel un bit d'information est codé par le signe et/ou la valeur de l'angle d'inclinaison, et un moyen d'enregistrement pour la génération de la marque de sécurité (30) en effectuant les étapes suivantes :

enregistrement d'un premier hologramme de sécurité (40) dans la zone d'hologramme (10) via une interférence du premier et du second faisceaux lumineux (7, 6),
déplacement du premier et du second faisceaux lumineux (7, 6) dans une troisième direction relative à la première et à la deuxième direction,
enregistrement d'un hologramme de sécurité supplémentaire (40) dans la zone d'hologramme (10) via l'interférence du premier et du second faisceaux lumineux (7, 6), l'hologramme de sécurité supplémentaire (40) étant identique audit premier hologramme de sécurité (40), et
répétition des étapes de déplacement du premier et du second faisceaux lumineux (7,6) et enregistrement d'un hologramme de sécurité supplémentaire (40) de sorte qu'une rangée d'hologrammes de sécurité identiques se chevauchant (40) est formée perpendiculairement à une direction de balayage pour la lecture des informations stockées dans la zone d'hologramme (10).

6. Un procédé pour la lecture d'une marque de sécurité (30) stockée dans une zone d'hologramme (10) d'un support de données optique (1) ladite marque de sécurité (30) consistant en une rangée d'hologrammes de sécurité identiques se chevauchant (40) formée perpendiculairement à une direction de balayage pour la lecture des informations stockées dans la zone d'hologramme (10), le procédé comprenant les étapes suivantes :

direction d'un faisceau de lecture lumineux (7) sur la marque de sécurité (30) en suivant une première direction,
direction d'un faisceau lumineux reconstruit (17a, 17b) en suivant une seconde direction vers un détecteur (15) disposant de zone de détection photo (a, b, c, d) adaptée afin de détecter une intensité lumineuse, la seconde direction dépendant d'une bit d'information enregistrée dans la marque de sécurité (30), et
détection du bit d'information à partir d'un angle d'inclinaison entre la première et la seconde direction en analysant une distribution d'intensité du faisceau lumineux reconstruit (17a, 17b) sur des zones de détection photo (a, b, c, d).

7. Un procédé de lecture pour la lecture d'une marque de sécurité (30) stockée dans une zone d'hologramme (10) d'un support de données optique (1), ladite marque de sécurité (30) consistant en une rangée d'hologrammes de sécurité identiques se chevauchant (40) formée perpendiculairement à une direction de balayage pour la lecture d'informations stockées dans la zone d'hologramme (10), le procédé de lecture comprenant :

une source lumineuse (3) adaptée pour diriger un faisceau de lecture lumineux (7) sur la marque de sécurité (30) en suivant une première direction,
un détecteur (15) comportant des zones de détection photo (a, b, c, d) adaptées pour détecter une intensité lumineuse, et
un collimateur (8) adapté afin de diriger un faisceau lumineux reconstruit (17a, 17b) en suivant une seconde direction sur les zones de détection photo (a, b, c, d) du détecteur (15), la seconde direction dépendant d'un bit d'information enregistré dans la marque de sécurité (30), **caractérisé en ce que** le dispositif comprend en outre un comparateur (20) adapté pour la détection de la bit d'information à partir d'un angle d'inclinaison entre la première direction et la seconde direction en analysant la distribution d'une intensité lumineuse du faisceau lumineux reconstruit (17a, 17b) sur les zones de détection photo (a, b, c, d).

**Fig. 1**

**Fig. 2**

**Fig. 3**

**Fig. 4**

**Fig. 5**

**Fig. 6**

**Fig. 7**

**Fig. 8**

**Fig. 9**

Tangential shift δx [μm]

**Fig. 10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005048256 A